(19) Europäisches Patentamt
European Patent Office
Office européen des brevets

(11) EP 1 865 361 A1

(12) **EUROPEAN PATENT APPLICATION**
published in accordance with Art. 158(3) EPC

(43) Date of publication:
**12.12.2007 Bulletin 2007/50**

(21) Application number: **06730962.5**

(22) Date of filing: **28.03.2006**

(51) Int Cl.:
***G02B 27/01*** *(2006.01)* ***G02B 5/30*** *(2006.01)*

(86) International application number:
**PCT/JP2006/307014**

(87) International publication number:
**WO 2006/107006 (12.10.2006 Gazette 2006/41)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.03.2005 JP 2005101756**
**01.04.2005 JP 2005106379**

(71) Applicant: **TEIJIN LIMITED**
**Osaka-shi**
**Osaka 541-0054 (JP)**

(72) Inventors:
- **ONO, Yuhei,**
  **Teijin Limited**
  **Hino-shi, Tokyo 191-0065 (JP)**
- **IKEDA, Yoshinori,**
  **Teijin Limited**
  **Hino-shi, Tokyo 191-0065 (JP)**
- **UCHIYAMA, Akihiko,**
  **Teijin Limited**
  **Hino-shi, Tokyo 191-0065 (JP)**

(74) Representative: **Hallybone, Huw George et al**
**Carpmaels and Ransford,**
**43-45 Bloomsbury Square**
**London WC1A 2RA (GB)**

(54) **TRANSPARENT PLATE**

(57) The transparent sheet of the invention is used in a display device which comprises at least one transparent body and a retardation film, where reflection of display light from the display light source onto the transparent sheet forms an image of the display light in the forward field of vision of the observer and renders it visible to the observer, the retardation film being positioned with specified conditions. It is thereby possible to obtain a display device with high display quality and minimal double images. The display device used may be, for example, a HUD for display of information in the forward field of vision of a vehicle, ship or the like.

Fig. 2

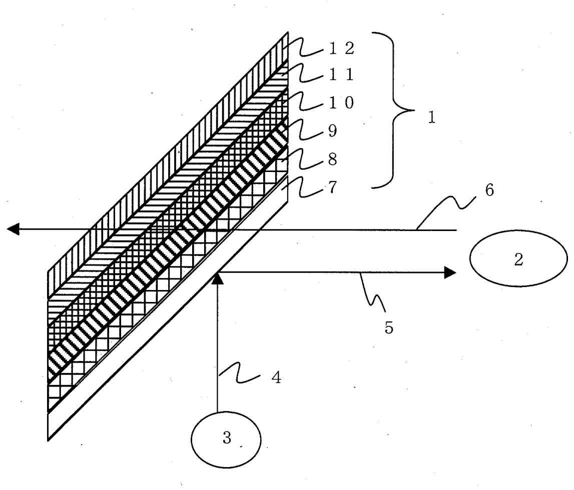




Printed by Jouve, 75001 PARIS (FR)

## Description

Technical Field

The present invention relates to a transparent sheet, and more specifically it relates to a transparent sheet which is useful for a display device such as a head-up display (HUD).

Background Art

It has been a goal in recent years to improve safety and convenience in vehicles, ships, aircraft and the like by using HUDs that display information within the forward field of vision. A HUD projects display light for a display onto a transparent sheet-like member and the display light is reflected by the surface of the transparent sheet, or a reflective film formed on the surface or interior of the transparent sheet, thus forming a visible image of the display light in the forward field of vision. The transparent sheet is made of simple or laminated glass or plastic, but a drawback has existed in that it is impossible to avoid reflection at interfaces with large differences in the interlayer refractive indexes, such as interfaces between transparent sheet back surfaces and air, thus resulting in double visibility of images.

Japanese Unexamined Patent Publication HEI No. 2-141720 and Japanese Unexamined Patent Publication HEI No. 10-96874 propose forming a retardation film with a phase contrast corresponding to λ/2 in the transparent sheet as a means of overcoming the aforementioned drawback.

However, these publications disclose no details on the phase contrast value and positioning angle of the retardation film, which are most important for forming a retardation film. Polyvinyl alcohol is also disclosed as a specific material for the retardation film, but because it has a low glass transition point of about 80°C and a hygroscopic nature, problems of heat resistance and durability are of concern when it is used in a display device.

DISCLOSURE OF THE INVENTION

It is a principal object of the invention to provide a novel transparent sheet which can be used for a display device.

It is another object of the invention to provide a transparent sheet for use in a display device with high display quality and minimal double images.

It is yet another object of the invention to provide a display device with high display quality, which is suitable for used in vehicles, ships and aircraft.

Other objects and advantages of the invention will become apparent by the detailed description which follows.

In order to solve the problems described above, the present inventors conducted diligent research based on the premise that the phase contrast value and positioning angle are important for a retardation film used in the interior or on the surface of a transparent sheet, and succeeded in obtaining the transparent sheet of the invention.

The objects and advantages of the present invention are achieved by:

A transparent sheet used for a display device, comprising at least one transparent body and a retardation film, and reflecting display light projected from a display light source to form an image of the display light in the forward field of vision of an observer and render it visible to the observer, the transparent sheet being characterized in that the retardation film is situated in such a manner that the following inequalities (I) and (II) are satisfied:

$$\frac{0.9\pi}{4} < \cos^{-1}\left(\frac{\cos\left(\sin^{-1}\left(\frac{\sin\theta}{n}\right)\right)\cos\phi}{\sqrt{1-\left(\frac{\sin\theta}{n}\right)^2\cos^2\phi}}\right) < \frac{1.1\pi}{4} \qquad (\mathrm{I})$$

$$0.94\pi < \frac{2\pi}{\lambda}d\left\{n_x\sqrt{1-\left(\frac{\sin^2\phi}{n_x^2}+\frac{\cos^2\phi}{n_z^2}\right)\sin^2\theta}-n_y\sqrt{1-\left(\frac{\sin^2\phi}{n_z^2}+\frac{\cos^2\phi}{n_y^2}\right)\sin^2\theta}\right\} < 1.06\pi$$

(II)

(wherein $\theta$ in inequalities (I) and (II) represents the angle formed between the normal to the transparent sheet and the display light, $\varphi$ represents the angle formed between the projection line of the display light onto the transparent sheet and the slow axis of the retardation film, n represents the average refractive index of the retardation film, nx, ny and nz are the three-dimensional refractive indexes of the retardation film, namely the refractive indexes in the x-axis direction which has the maximum refractive index in the plane of the retardation film, the y-axis direction which is perpendicular to the x-axis in the plane of the film and the z-axis direction which is normal to the film, d is the thickness (nm) of the retardation film and $\lambda$ is the center wavelength (nm) of the display light source.

According to the invention, the retardation film is used and situated in such a manner that the phase contrast value and positioning angle are in specified ranges, whereby it is possible to obtain a display device with a high quality display and minimal double images. The display device used may be, for example, a HUD for display of information in the forward field of vision of a vehicle, ship or the like.

Brief Description of the Drawings

Fig. 1 is a schematic view of a display device of the invention.

Fig. 2 shows a transparent sheet for Example 1 of the invention.

Fig. 3 is a schematic view for illustration of a display device of the invention.

Fig. 4 is a schematic view for illustration of a display device of the invention.

[Explanation of Symbols]

1: Transparent sheet
2: Observer
3: Display light source
4: Display light projected onto transparent sheet
5: Display light reflected by transparent sheet and visible in forward field of vision of observer
6: Observer forward field of vision
7: Transparent body 1
8: Adhesive layer 1
9: Retardation film
10: Adhesive layer 2
11: Interlayer film
12: Transparent body 2
13: Normal to transparent sheet
14: Retardation film slow axis (film surface)
15: Projection line of display light onto transparent sheet

Description of the Preferred Embodiments

The transparent sheet of the invention is used in a display device wherein display light projected from a display light source is reflected to form an image of the display light in the forward field of vision of an observer and render it visible to the observer. It comprises at least one transparent body and a retardation film. Preferably, it is a transparent sheet constructed with a retardation film positioned between two transparent bodies, as shown in Fig. 2.

The phase contrast value (R Value) in the plane of the retardation film used for the invention is represented by the following formula (a):

$$R = (n_x - n_y) \times d \quad (a)$$

In this formula, $n_x$ and $n_y$ are three-dimensional refractive indexes of the retardation film, and specifically the refractive indexes in the x-axis direction which has the maximum refractive index in the plane of the film and in the y-axis direction which is perpendicular to the x-axis in the plane of the film. The letter d represents the thickness (nm) of the retardation film. According to the invention, the three-dimensional refractive indexes are determined based on the known index ellipsoid formula, with the optical anisotropy of the retardation film considered as an index ellipsoid. Since the three-dimensional refractive indexes are dependent on the wavelength of the light source used, they are preferably defined by the wavelength of the light source used, being considered as the center wavelength of the display body for the display device of the invention, and for the purpose of the invention they are the values at 550 nm if the wavelength is not specifically indicated.

In order to prevent double images using a retardation film, the linear polarized light incident to the retardation film is preferably rotated 90°. When light is incident from the normal direction to the film, a retardation film with a phase contrast value of λ/2 may be positioned with its optical axis at 45° with respect to the direction of oscillation of the incident linear polarized light. However, because the incident angle to the transparent sheet approaches the Brewster angle, it is approximately 56° when, for example, the outermost surface of the transparent sheet on the observer side consists of untreated sheet glass. That is, light impinges on the retardation film used in the interior or on the surface of the transparent sheet, at a considerable slant instead of normal to the film. The phase contrast value and positioning angle of the retardation film for 90° rotation of actually impinging linear polarized light are significantly shifted from λ/2 and 45°.

For 90° rotation of incident linear polarized light it is necessary to position a retardation film that satisfies the following inequalities (I) and (II). These inequalities (I) and (II) represent the effective angle of the optical axis and effective phase contrast with respect to light incident at a slant to the film.

$$\frac{0.9\pi}{4} < \cos^{-1}\left( \frac{\cos\left(\sin^{-1}\left(\frac{\sin\theta}{n}\right)\right)\cos\phi}{\sqrt{1-\left(\frac{\sin\theta}{n}\right)^2\cos^2\phi}} \right) < \frac{1.1\pi}{4} \qquad \text{(I)}$$

$$0.94\pi < \frac{2\pi}{\lambda} d \left\{ n_x \sqrt{1-\left(\frac{\sin^2\phi}{n_x^2}+\frac{\cos^2\phi}{n_z^2}\right)\sin^2\theta} - n_y \sqrt{1-\left(\frac{\sin^2\phi}{n_z^2}+\frac{\cos^2\phi}{n_y^2}\right)\sin^2\theta} \right\} < 1.06\pi$$

(II)

Here, θ represents the angle formed between the normal to the transparent sheet, and the display light, as shown in Fig. 3. φ represents the angle formed between the projection line of display light onto the transparent sheet and the slow axis of the retardation film, as shown in Fig. 4. Fig. 4 is a view of the retardation film from the film surface. In this formula, n is the average refractive index of the retardation film and $n_x$, $n_y$ and $n_z$ are three-dimensional refractive indexes of the retardation film, and specifically the refractive indexes in the x-axis direction which has the maximum refractive index in the plane of the film, the y-axis direction which is perpendicular to the x-axis in the plane of the film and the z-axis direction which is normal to the film. The letter d represents the thickness (nm) of the retardation film, and λ represents the center wavelength (nm) of the display light source.

The retardation film used for the invention more preferably satisfies the following inequalities (3) and (4).

$$\frac{0.95\pi}{4} < \cos^{-1}\left( \frac{\cos\left(\sin^{-1}\left(\frac{\sin\theta}{n}\right)\right)\cos\phi}{\sqrt{1-\left(\frac{\sin\theta}{n}\right)^2\cos^2\phi}} \right) < \frac{1.05\pi}{4} \qquad (3)$$

$$0.96\pi < \frac{2\pi}{\lambda} d \left\{ n_x \sqrt{1-\left(\frac{\sin^2\phi}{n_x^2}+\frac{\cos^2\phi}{n_z^2}\right)\sin^2\theta} - n_y \sqrt{1-\left(\frac{\sin^2\phi}{n_z^2}+\frac{\cos^2\phi}{n_y^2}\right)\sin^2\theta} \right\} < 1.04\pi \qquad (\ 4$$

It even more preferably satisfies the following inequalities (5) and (6).

$$\frac{0.98\pi}{4} < \cos^{-1}\left( \frac{\cos\left(\sin^{-1}\left(\frac{\sin\theta}{n}\right)\right)\cos\phi}{\sqrt{1-\left(\frac{\sin\theta}{n}\right)^2\cos^2\phi}} \right) < \frac{1.02\pi}{4} \qquad (5)$$

$$0.98\pi < \frac{2\pi}{\lambda} d \left\{ n_x \sqrt{1-\left(\frac{\sin^2\phi}{n_x^2}+\frac{\cos^2\phi}{n_z^2}\right)\sin^2\theta} - n_y \sqrt{1-\left(\frac{\sin^2\phi}{n_z^2}+\frac{\cos^2\phi}{n_y^2}\right)\sin^2\theta} \right\} < 1.02\pi \qquad (\ 6$$

For example, when the incident angle θ of the display light on the transparent sheet is 56° and the average refractive index n of the retardation film is 1.53, the optimum in-plane phase contrast value R and positioning angle φ are 279 nm and 40° respectively, when the average refractive index n is 1.59 they are 278 nm and 40.5° respectively, and when the average refractive index n is 1.64 they are 278 nm and 40.8° respectively.

The material composing the retardation film may be a thermoplastic polymer or thermosetting polymer. Materials with excellent moldability and heat resistance, satisfactory optical performance and good film formability are preferred. For example, suitable thermoplastic polymers include polyallylates, polyesters, polycarbonates, polyolefins, polyethers, polysulfin copolymers, polysulfones, polyethersulfones and the like.

These thermoplastic polymers may be blends of two or more different copolymers, blends of one or more copolymers with the aforementioned blends or other polymers, or blends of two or more blends, copolymers or other polymers. Aromatic polycarbonates are particularly preferred for use because of their excellent transparency, heat resistance, productivity, phase contrast expression and phase contrast stability. An aromatic polycarbonate may be produced by reacting, for example, a bisphenol with phosgene or a carbonic acid ester-forming compound such as diphenyl carbonate, by a known process.

As aromatic polycarbonates there may be mentioned those comprising a repeating unit represented by the following formula (B):

( B

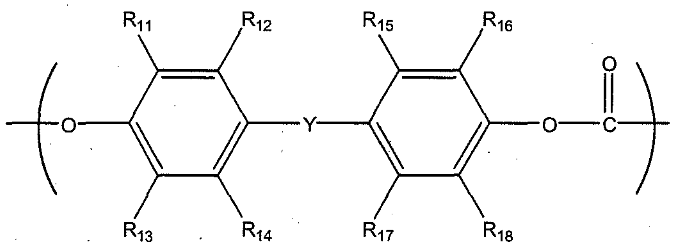

In formula (B), $R_{11}$-$R_{18}$ each independently represent hydrogen, a halogen atom or at least one organic group selected from among C1-22 hydrocarbon groups. As examples of C1-22 hydrocarbon groups there may be mentioned C1-9 alkyl groups such as methyl, ethyl, isopropyl and cyclohexyl, and aryl groups such as phenyl, biphenyl and terphenyl. Preferred among these are hydrogen and methyl.

Y above represents any group from among the following:

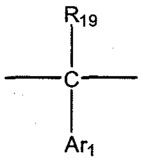 , 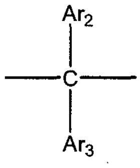 , 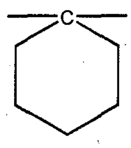 , 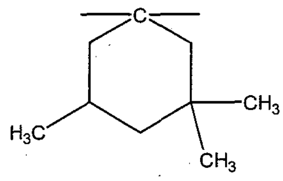 , 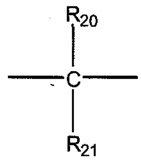 ,

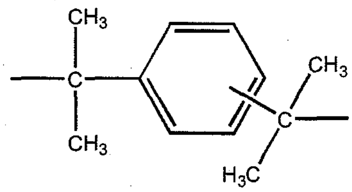 , 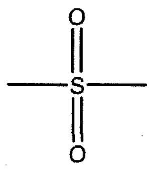 , 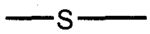 ,

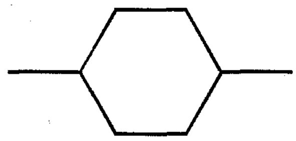 ,

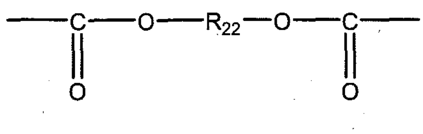 , 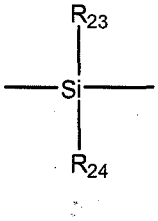 and 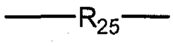 (Y)

In these formulas, $R_{19}$-$R_{21}$, $R_{23}$ and $R_{24}$ each independently represent hydrogen, a halogen atom or at least one organic group selected from among C1-22 hydrocarbon groups. As such hydrocarbon groups there may be mentioned the same ones cited above. $R_{22}$ And $R_{25}$ are each independently selected from among Cl-20 hydrocarbon groups. As such hydrocarbon groups there may be mentioned the same ones cited above. As groups for $Ar_1$-$Ar_3$ there may be mentioned C6-10 aryl groups such as phenyl and naphthyl.

Aromatic polycarbonates including a repeating unit represented by the following formula (D) exhibit satisfactory

productivity and transparency.

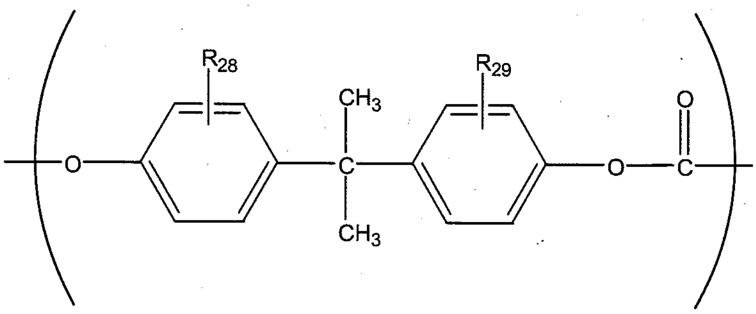

(D)

In formula (D), $R_{28}$-$R_{29}$ each independently represent hydrogen or methyl, and preferably both are hydrogen from the standpoint of economy and film properties.

The content of the repeating unit is preferably at least 10 mol%, more preferably at least 30 mol% and even more preferably at least 50 mol% based on the total repeating units of the aromatic polycarbonate. A content of 100 mol% may also be suitable depending on the specific use of the display device.

The aromatic polycarbonate is preferably one having a component with a fluorene skeleton in order to provide satisfactory heat resistance and give the desired phase contrast characteristics.

Specifically, there may be mentioned the following aromatic polycarbonates having a repeating unit with a fluorene ring. Specifically, there may be mentioned those comprising a repeating unit represented by formula (B) above and a repeating unit represented by the following formula (A).

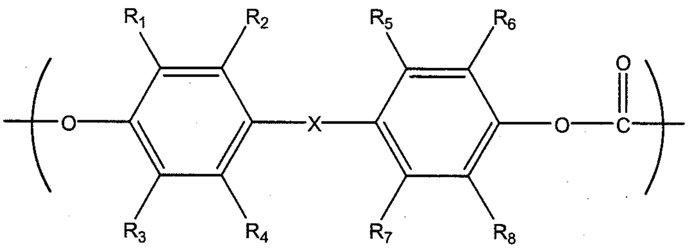

In formula (A), $R_1$-$R_8$ each independently represent hydrogen, a halogen atom or at least one organic group selected from among C1-6 hydrocarbon groups. As examples of C1-6 hydrocarbon groups there may be mentioned alkyl groups such as methyl, ethyl, isopropyl and cyclohexyl, and aryl groups such as phenyl. Preferred among these are hydrogen and methyl.

X is a fluorene ring represented by the following formula (X):

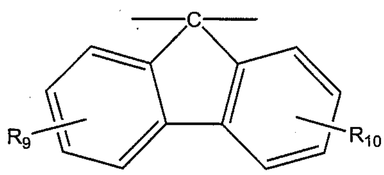

$R_9$ and $R_{10}$ each independently represent hydrogen, a halogen atom or a C1-3 alkyl group. They are preferably hydrogen.

The content of the repeating unit represented by formula (A) is preferably 10-90 mol% and more preferably 30-80 mol% based on the total of the repeating units composing the aromatic polycarbonate. The polycarbonate may be any one including a repeating unit represented by formulas (A) and (B). Specifically, it may be a copolymer or a blend of a polycarbonate composed of a repeating unit represented by formula (A) and a polycarbonate composed of a repeating unit represented by formula (B).

Aromatic polycarbonates comprising a repeating unit represented by formula (D) above and a repeating unit

represented by the following formula (C):

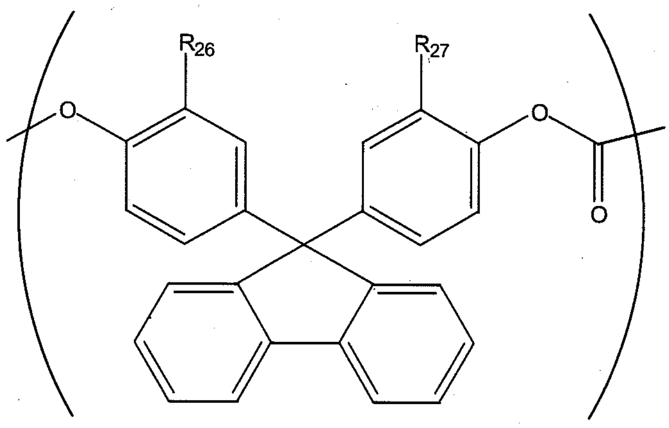

is preferred from the standpoint of balance between film formability, transparency, heat resistance, durability and productivity. In formula (C), $R_{26}$-$R_{27}$ are each independently selected from among hydrogen and methyl. They are preferably both methyl from the standpoint of manageability.

Preferred are polycarbonate copolymers or blends wherein the contents of the repeating units represented by formulas (C) and (D) above are such that the repeating unit represented by formula (C) constitutes 10-90 mol% and the repeating unit represented by formula (D) constitutes 90-10 mol% of the total. More preferably, the repeating unit represented by formula (C) constitutes 30-80 mol% and the repeating unit represented by formula (D) constitutes 70-20 mol%.

According to the invention, the molar ratio for either a copolymer or a blend may be determined, for example, using a nuclear magnetic resonance (NMR) device, with the total polycarbonate bulk composing the retardation film.

The polymer material preferably has a high glass transition point (Tg). Specifically, the Tg is preferably 120-280°C, more preferably 150-270°C, even more preferably 160-260°C, yet more preferably 170-250°C and most preferably 180-240°C. With a temperature of below 120°C, the thermal dimensional stability and phase contrast stability will be insufficient. With a temperature of above 280°C, the temperature control in the stretching step will become exceedingly difficult, thereby hampering production.

The polymer material of the retardation film according to the invention may be produced by a known method. For example, a polycarbonate may be produced by a method of polycondensation of a dihydroxy compound and phosgene, or a melt polycondensation method. For a blend, a compatible blend is preferred but the compatibility does not have to be complete, as the refractive indexes of the components may be matched to prevent light scattering between the components and improve the transparency.

The retardation film of the invention is a polymer oriented film obtained by stretching the aforementioned polycarbonate or other polymer film for orientation of the polymer chains. The method of producing the polymer film may be a known melt extrusion method or solution casting method. The solvent used in a solution casting method for a polycarbonate may be methylene chloride, dioxolanemethylene chloride, dioxolane or the like.

The polymer film produced by a melt extrusion method or solution casting method is then heated and stretched at a temperature near the glass transition point to obtain a polymer oriented film. The stretching temperature and conditions are set as appropriate for the polymer. For the purpose of improving the stretching property during the stretching, a known plasticizer may be added such as, for example, a phthalic acid ester such as dimethyl phthalate, diethyl phthalate or dibutyl phthalate, a phosphoric acid ester such as tributyl phosphate, an aliphatic dibasic ester, a glycerin derivative, a glycol derivative or the like. The organic solvent used for the film formation described above may also be left in the film for the subsequent stretching.

Additives such as plasticizers or liquid crystals can alter the wavelength dependency of phase contrast for the retardation film, but the amounts added are preferably no greater than 10 wt% and more preferably no greater than 3 wt% with respect to the polymer solid content.

Also, an ultraviolet absorber such as phenylsalicylic acid, 2-hydroxybenzophenone or triphenyl phosphate, a bluing agent for modification of the tint, or a polymer modifier such as an antioxidant, heat stabilizer, light stabilizer, transparent nucleating agent, permanent antistatic agent or fluorescent brightener may be added simultaneously to the film.

The retardation film of the invention preferably has satisfactory transparency, with a haze of no greater than 5% and a total light transmittance of at least 85%, but the haze value may be purposely increased in some cases.

The retardation film used for the invention performs the role of rotating the linear polarized light by 90°. When the display light is not monochromatic but polychromatic light, the retardation film is preferably one with optical rotation

in a wide wavelength range. Specifically, it preferably satisfies the following inequality (11).

$$R(\lambda 1) < R(\lambda 2) \quad (11)$$

In inequality (11), R (λ1) and R (λ2) are the in-plane phase contrasts (R) of the retardation film at wavelengths λ1 and λ2 respectively, where the in-plane phase contrast (R) is represented by the following formula (12):

$$R = (nx-ny) \times d \quad (12)$$

In this formula, $n_x$ and $n_y$ are three-dimensional refractive indexes of the retardation film, and specifically the refractive indexes in the x-axis direction which is the maximum refractive index in the plane of the film and in the y-axis direction which is perpendicular to the x-axis in the plane of the film, while d is the thickness (nm) of the retardation film.

Also, λ1 and λ2 are arbitrary wavelengths (nm) that satisfy the following inequality (13):

$$400\ nm < \lambda 1 < \lambda 2 < 700\ nm \quad (13)$$

The retardation film more preferably satisfies the following inequalities (14) and (15).

$$0.6 < R(450)/R(550) < 0.97 \quad (14)$$

$$1.01 < R(650)/R(550) < 1.4 \quad (15)$$

It even more preferably satisfies the following inequalities (16) and (17).

$$0.75 < R(450)/R(550) < 0.95 \quad (16)$$

$$1.02 < R(650)/R(550) < 1.3 \quad (17)$$

A retardation film satisfying the properties described above is constructed of a material including a monomer unit with positive refractive index anisotropy and a monomer unit with negative refractive index anisotropy.

As specific examples that satisfy the properties described above there may be mentioned polycarbonate copolymers including a structure with a fluorene skeleton, referred to above. In this case, polycarbonates composed of a repeating unit represented by formula (B) above and a repeating unit represented by formula (A) above are particularly preferred.

The thickness of the retardation film is preferably from 1 μm to 150 μm. When the retardation film is used sandwiched between two transparent bodies, it is preferred for it to have a smaller film thickness, being preferably no greater than 80 μm, more preferably no greater than 50 μm, even more preferably no greater than 40 μm, yet more preferably no greater than 30 μm and even no greater than 20 μm so long as this creates no problems in terms of handling. The term "retardation film" used according to the invention includes the meanings of both "film" and "sheet".

The retardation film used for the invention may also have, for example, a hard coat layer, ultraviolet absorption layer, reflective layer or the like formed on its surface.

The hard coat layer referred to here has the function of protecting the retardation film from the transparent bodies, for example. Specifically, it has the function of not only providing resistance against damage to the surface of the retardation film, but also providing solvent resistance and ultraviolet resistance. Solvent resistance can provide an effect of protecting the retardation film from plasticizers such as triethyleneglycol-di-2-ethyl hexoate that are present in interlayer film materials such as polyvinyl butyral that are used for positioning of retardation films on glass panels, for example.

There are no particular restrictions on the material for a hard coat layer, but it is preferably composed of a crosslinked polymer from the standpoint of damage resistance and solvent resistance. Particularly when a polycarbonate is used as the structural material of the retardation film, it is preferred to use a crosslinked polymer obtained by hardening a curable resin, for the reasons explained above.

The crosslinked polymer may be, for example, an acrylic polymer, epoxy polymer, or a heat or ultraviolet curing polymer such as silicone. Among these are preferred acrylic polymers containing a unit represented by the following formula (1):

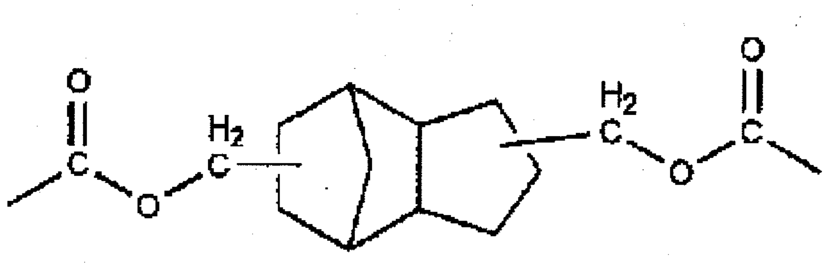

(1)

when the retardation film is produced from the aforementioned polycarbonate. A hard coat layer composed of such an acrylic polymer is formed on at least one side of the retardation film to obtain a retardation film with excellent damage resistance and solvent resistance.

Preferred acrylic polymers are those with a unit represented by the following formula (1-1).

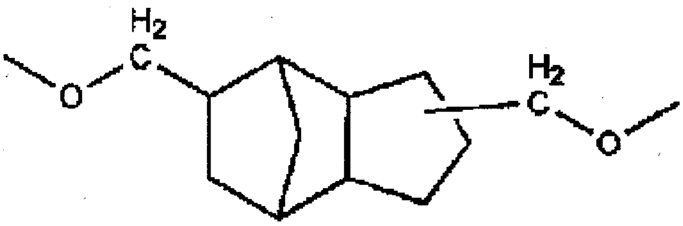

(1 − 1)

A hard coat layer composed of an acrylic polymer containing a unit represented by formula (1) above can be obtained by, for example, irradiating active light rays (such as ultraviolet rays) onto, or heating, an acrylate monomer represented by the following formula (5) :

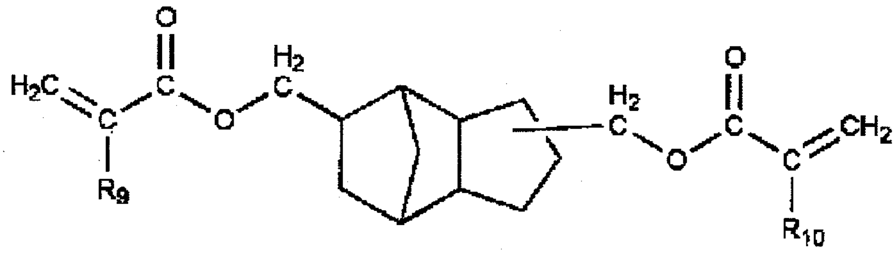

(5)

having the structure described above, after adding a reaction initiator if necessary, for polymerization and curing.

In this formula, $R_9$ and $R_{10}$ each independently represent hydrogen or methyl.

As a specific example of an acrylate monomer there may be mentioned dimethylोltricyclodecane diacrylate.

The structure of the unit represented by formula (1) is included at preferably 5-100 wt% and more preferably 20-100% with respect to the total weight of the crosslinked polymer composing the hard coat layer. At less than 5%, the intended damage resistance and solvent resistance may not be sufficiently exhibited, or the flexibility may be poor. Specifically, the crosslinked polymer may also include 95-0 wt% of another unit, derived from a different acrylate monomer other than an acrylate monomer represented by formula (5) above. As examples of such other acrylate monomers there may be mentioned urethane acrylate, ester acrylates, epoxy acrylates and other polyfunctional acrylates.

The crosslinked polymer may also contain appropriate amounts of a catalyst for polymerization of the acrylic

polymer, or other additives (for example, leveling agents or fine particles such as silica) for increased functionality such as film formability; ultraviolet absorption, adhesion and the like.

For formation of the hard coat layer, the surface of the retardation film on which the hard coat layer is to be formed may be coated with a coating solution containing the aforementioned acrylate monomer and initiator by a method such as wet coating, and then irradiated with active light rays (for example, ultraviolet rays) or heated.

The wet coating method may be a known method such as a microgravure or Meyer bar method. If necessary, the coating may be accomplished after dissolving the acrylate monomer in a solvent to an appropriate concentration.

The thickness of the hard coat layer is preferably in the range of 0.1-20 μm. If the thickness is less than 0.1 μm it may not be possible to exhibit sufficient damage resistance and solvent resistance, and if it exceeds 20 μm the layer may exhibit reduced physical properties, such as poor adhesiveness. The thickness of the hard coat layer is more preferably 0.3-10 μm, to help keep cure shrinkage of the hard coat layer from causing the film to warp after formation of the hard coat layer.

According to the invention, therefore, there is provided a transparent sheet of the invention wherein the aforementioned retardation film is situated on a transparent body, and preferably between a pair of transparent bodies.

The transparent body in the transparent sheet of the invention is a transparent molded panel made of inorganic or organic glass. The panel does not necessarily have to be flat, and may instead be curved. Such a transparent body may also have a transparent coating layer. Also, instead of a single sheet, the structure may be a transparent body laminate comprising a combination of two transparent bodies attached via an interlayer film. The interlayer film used may be made of a known material (for example, polyvinylbutyral, hereinafter referred to as PVB).

The thickness of the transparent body is preferably in the range of 0.1-50 mm.

The retardation film is attached directly to the transparent body by an adhesive or pressure-sensitive adhesive, or via an interlayer film, and the adhesive or pressure-sensitive adhesive used may be a known material. An ultraviolet absorber or the like may also be included in the adhesive or pressure-sensitive adhesive.

The transparent sheet of the invention may be applied, for example, on windshields of vehicles, ships, aircraft and the like, or separately as a head-up display (HUD). In addition, it may be provided in construction glass, partitionings or the like for different types of displays.

When applied on windshields of vehicles, ships or aircraft, the retardation film is preferably formed on the side facing the transparent body in order to improve the impact resistance and penetration resistance. The retardation film is preferably formed on the side facing the transparent body for interior uses because sunlight will strike the retardation film through the interlayer film, thereby absorbing ultraviolet rays to some extent and improving the durability.

The thickness of the transparent sheet of the invention is not particularly restricted but is preferably in the range of 0.2-100 mm.

The transparent sheet of the invention is preferably provided with a transparent reflective layer to allow high-brightness, high-contrast display. The transparent.reflective layer used may be any of various transparent reflective layers such as metal thin films made of Au, Ag, Cu or the like, or metal oxides such as titanium oxide, indium oxide or tin oxide. The transparent reflective layer is used on the surface of the transparent body or on the surface of the retardation film.

According to the invention, the appearance of double images is considerably reduced due to the retardation film, and therefore an adequate effect may be expected even with relatively low reflectance that merely compensates for the loss of back reflection, thus making it possible to achieve materials with more excellent mar proofness and a medium refractive index, or thinner films using the same materials. Furthermore, since there is no need to minimize the reflectance within the restrictions for transmittance established by regulations, it is possible to achieve a satisfactory appearance with minimally visible reflection when the film is used in a vehicle, for example.

According to the invention, it is possible to project display light onto the transparent sheet to form an image of the display light in the forward field of vision of the observer and render it visible, and thus to provide a HUD which displays information in the forward field of vision. Thus, the display device is constructed to comprise at least a display light source that emits display light, and a transparent sheet that reflects display light from the display light source. The display light is reflected on the transparent sheet, thus forming an image of the display light in the forward field of vision of the observer and rendering it visible to the observer (for example, see Fig. 1).

Also according to the invention, the incident angle of the display light on the transparent sheet is preferably close to the Brewster angle, and for example, it is preferably about 56 ±10° when untreated panel glass is on the uppermost surface on the observer side of the transparent sheet.

## EXAMPLES

The present invention will now be described in greater detail by examples, with the understanding that the invention is not limited thereto.

The values for the properties of the materials mentioned throughout the present specification were obtained

by the following evaluation methods.

(1) Measurement of in-plane phase contrast R value and three-dimensional refractive index
The in-plane phase contrast R value and three-dimensional refractive index were measured using a KOBRA-21ADH birefringence measuring apparatus (product of Oji Scientific Instruments).
(2) Measurement of polymer glass transition point (Tg)
This was measured using a DSC2920 Modulated DSC (product of TA Instruments). Measurement was conducted not after molding of the film but after production of the polymer, in the form of flakes or chips.
(3) Measurement of film thickness
Measurement was performed using an electronic micrometer by Anritsu.
(4) Measurement of polycarbonate copolymer copolymerization ratio
This was measured with a JNM-alpha600 proton NMR apparatus (product of JEOL Corp.) Heavy benzene was used as the solvent, and calculation was performed from the proton intensity ratio for each methyl group.
(5) Polycarbonate copolymer polymerization method
The monomer structures (bisphenol compounds) of the polycarbonates used in Examples 1, 2 and 6 are shown below.

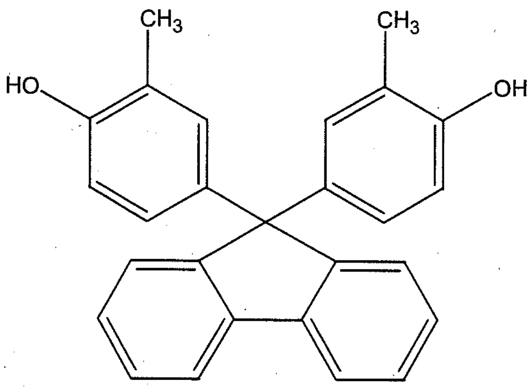

(E)

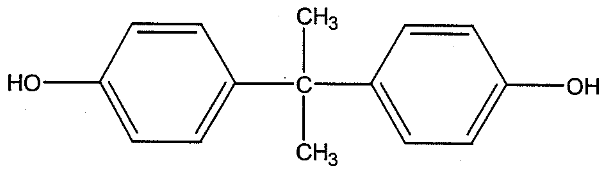

(F)

A sodium hydroxide aqueous solution and ion-exchanged water were charged into a reaction tank equipped with a stirrer, thermometer and reflux condenser. These monomers [E] and [F] were charged and dissolved therein in a molar ratio of a:b, and a small amount of hydrosulfite was added. Next, methylene chloride was added and phosgene was blown in for about 60 minutes at 20°C. After then adding p-tertbutylphenol for emulsification, triethylamine was added and the mixture was stirred for about 3 hours at 30°C for completion of the reaction. Upon completion of the reaction, the organic phase was separated off and the methylene chloride was evaporated off to obtain a polycarbonate copolymer. The compositional ratio of the obtained copolymer was approximately the same as the monomer charging ratio. The values for the properties of the materials mentioned throughout the present specification were obtained by the evaluation methods described above.
(6) Evaluation of formulas (1) and (2)
The value of

$$\cos^{-1}\left(\frac{\cos\left(\sin^{-1}\left(\frac{\sin\theta}{n}\right)\right)\cos\phi}{\sqrt{1-\left(\frac{\sin\theta}{n}\right)^2\cos^2\phi}}\right)$$

in formula (1) above was defined as φ1, and the value of

$$\frac{2\pi}{\lambda}d\left\{n_x\sqrt{1-\left(\frac{\sin^2\phi}{n_x^2}+\frac{\cos^2\phi}{n_z^2}\right)\sin^2\theta}-n_y\sqrt{1-\left(\frac{\sin^2\phi}{n_z^2}+\frac{\cos^2\phi}{n_y^2}\right)\sin^2\theta}\right\}$$

in formula (2) above was defined as R1.

Example 1

A polycarbonate copolymer copolymerized by the method described above with a:b = 50:50 was dissolved in methylene chloride to prepare a dope solution with a solid concentration of 18 wt%. A cast film was prepared from the dope solution and subjected to uniaxial stretching at 220°C to a factor of 1.9 to obtain a retardation film with a average refractive index of 1.62, an R value of 278 nm and a thickness of 30 μm. The retardation film was used to fabricate a transparent sheet with the structure shown in Fig. 2, in the following manner.

The retardation film was attached to a 2 mm-thick transparent soda lime inorganic glass plate (transparent body 1) via an isocyanate adhesive layer (adhesive layer 1), in such a manner that the positioning angle (φ) between the projection line of display light on the transparent sheet and the slow axis of the film was 40.7°. After attaching onto this the same isocyanate adhesive layer (adhesive layer 2) as adhesive layer 1, a 2 mm-thick soda lime inorganic glass (transparent body 2) was laminated therewith via a PVB film to fabricate a transparent sheet.

This transparent sheet was irradiated with an outgoing beam from a liquid crystal display at an incident angle (θ) of 56° in such a manner that the direction of oscillation of the polarized light was parallel to the transparent sheet. The values of Φ1 and R1 were 1.00/4π and 1.00π, respectively.

The display on the transparent sheet was clearly visible with no double image.

Example 2

A polycarbonate copolymer copolymerized by the method described above with a:b = 63:37 was dissolved in methylene chloride to prepare a dope solution with a solid concentration of 18 wt%. A cast film was prepared from the dope solution and subjected to uniaxial stretching at 225°C to a factor of 2.1 to obtain a retardation film with a average refractive index of 1.64, an R value of 278 nm and a thickness of 40 μm. A transparent sheet was fabricated with the same construction as Example 1, except that the retardation film was situated at an angle of 40.8°. The values of Φ1 and R1 were 1.00/4π and 1.00π, respectively.

The display on the transparent sheet was clearly visible with no double image.

Example 3

The polycarbonate PANLITE C1400QJ by Teijin Chemicals, Ltd. was dissolved in methylene chloride to prepare a dope solution with a solid concentration of 18 wt%. A cast film was prepared from the dope solution and subjected to uniaxial stretching at 165°C to a factor of 1.2 to obtain a retardation film with a average refractive index of 1.59, an R value of 278 nm and a thickness of 30 μm. A transparent sheet was fabricated with the same construction as Example 1, except that the retardation film was situated at an angle of 40.5°. The values of Φ1 and R1 were 1.00/4π and 1.00π, respectively.

The display on the transparent sheet was clearly visible with no double image.

Example 4

ZEONORFILM by Optes Inc. with a average refractive index of 1.53, an R value of 275 nm and a thickness of 40 μm was used as the retardation film. A transparent sheet was fabricated with the same construction as Example 1, except that the retardation film was situated at an angle of 40.5°. The values of Φ1 and R1 were 1.00/4π and 0.98π, respectively.

The display on the transparent sheet was clearly visible with no double image.

Example 5

The polycarbonate APEC by Bayer was dissolved in methylene chloride to prepare a dope solution with a solid concentration of 18 wt%. A cast film was prepared from the dope solution and subjected to uniaxial stretching at 225°C to a factor of 1.2 to obtain a retardation film with a average refractive index of 1.59, an R value of 278 nm and a thickness of 30 μm. A transparent sheet was fabricated with the same construction as Example 1, except that the retardation film was situated at an angle of 40.5°. The values of Φ1 and R1 were 1.00/4π and 1.00π, respectively.

The display on the transparent sheet was clearly visible with no double image.

Example 6

Polycarbonate polymerized by the method described above with a:b = 0:100 was dissolved in methylene chloride to prepare a dope solution with a solid concentration of 18 wt%. A cast film was prepared from the dope solution and subjected to uniaxial stretching at 175°C to a factor of 1.1 to obtain a retardation film with a average refractive index of 1.58, an R value of 278 nm and a thickness of 25 μm. A hard coat layer was formed on each side of the retardation film, in the following manner. A coating solution was prepared comprising 50 parts by weight of dimethyloltricyclodecane diacrylate (Light Acrylate DCP-A by Kyoeisha Chemical Co., Ltd.), 50 parts by weight of urethane acrylate (TPH19 by Jujo Chemical Co., Ltd.), 7 parts by weight of IRGACURE 187 by Ciba Geigy as a photoinitiator, 0.05 part by weight of SH28PA by Toray/Dow Corning, Inc. as a leveling agent and 180 parts by weight of 1-methoxy-2-propanol as a diluting solvent. The solution was roll coated onto the retardation film to a post-drying thickness of 5 μm. After drying at 60°C for 30 seconds, it was irradiated with ultraviolet rays at a cumulative dose of 700 mJ/$cm^2$ using a high-pressure mercury lamp with an intensity of 160 W/cm to form a hard coat layer. A transparent sheet was fabricated having the same construction as Example 1, except that the retardation film on which the hard coat layer was formed was situated at an angle of 40.8°. The values of Φ1 and R1 were 1.00/4π and 1.00π, respectively.

The display on the transparent sheet was clearly visible with no double image.

Example 7

A commercially available ZEONORFILM polyolefin film by Optes Inc. was subjected to uniaxial stretching to a factor of 1.8 at 145°C to obtain a retardation film with a average refractive index of 1.53, an R value of 279 nm and a thickness of 60 μm. A hard coat layer was formed on both sides of the retardation film by the same method as in Example 7. A transparent sheet was fabricated having the same construction as Example 1, except that the hard coat layer-attached retardation film was situated at an angle of 40.0°. The values of Φ1 and R1 were 1.00/4π and 1.00π, respectively.

The display on the transparent sheet was clearly visible with no double image.

Comparative Example 1

PANLITE C1400QJ by Teijin Chemicals, Ltd. was dissolved in methylene chloride to prepare a dope solution with a solid concentration of 18 wt%. A cast film was prepared from the dope solution and subjected to uniaxial stretching at 165°C to a factor of 1.2 to obtain a retardation film with a average refractive index of 1.59, an R value of 278 nm and a thickness of 30 μm. A transparent sheet was fabricated with the same construction as Example 1, except that the retardation film was situated at an angle of 45°. The values of Φ1 and R1 were 1.10/4π and 1.02π, respectively.

The display on the transparent sheet was indistinct and had a double image.

Comparative Example 2

PVA117 by Kuraray Co., Ltd. was dissolved in hot water to prepare a dope solution with a solid concentration of 10 wt%. A cast film was prepared from the dope solution and subjected to uniaxial stretching to obtain a retardation film with a average refractive index of 1.55, an R value of 260 nm and a thickness of 40 μm. A transparent sheet was fabricated with the same construction as Example 1, except that the retardation film was situated at an angle of 40.2°.

The values of Φ1 and R1 were 1.00/4π and 0.93π, respectively.

The display on the transparent sheet was indistinct and had a double image.

Industrial Applicability

The transparent sheet of the invention can provide display devices with high display quality and minimally visible double images. It is therefore useful, for example, in HUDs that display information within the forward field of vision of vehicles, ships, aircraft and the like.

## Claims

1. A transparent sheet used for a display device, comprising at least one transparent body and a retardation film, and reflecting display light projected from a display light source to form an image of the display light in the forward field of vision of an observer and render it visible to the observer, the transparent sheet being **characterized in that** the retardation film is situated in such a manner that the following inequalities (I) and (II) are satisfied:

$$\frac{0.9\pi}{4} < \cos^{-1}\left(\frac{\cos\left(\sin^{-1}\left(\frac{\sin\theta}{n}\right)\right)\cos\phi}{\sqrt{1-\left(\frac{\sin\theta}{n}\right)^2\cos^2\phi}}\right) < \frac{1.1\pi}{4} \qquad \text{(I)}$$

$$0.94\pi < \frac{2\pi}{\lambda}d\left\{n_x\sqrt{1-\left(\frac{\sin^2\phi}{n_x^2}+\frac{\cos^2\phi}{n_z^2}\right)\sin^2\theta}-n_y\sqrt{1-\left(\frac{\sin^2\phi}{n_z^2}+\frac{\cos^2\phi}{n_y^2}\right)\sin^2\theta}\right\} < 1.06\pi$$

(II)

(wherein θ in inequalities (I) and (II) represents the angle formed between the normal to the transparent sheet and the display light, φ represents the angle formed between the projection line of the display light onto the transparent sheet and the slow axis of the retardation film, n represents the average refractive index of the retardation film, nx, ny and nz are the three-dimensional refractive indexes of the retardation film, namely the refractive indexes in the x-axis direction which has the maximum refractive index in the plane of the retardation film, the y-axis direction which is perpendicular to the x-axis in the plane of the film and the z-axis direction which is normal to the film, d is the thickness (nm) of the retardation film and λ is the center wavelength (nm) of the display light source.

2. The transparent sheet according to claim 1, wherein the retardation film is composed of a thermoplastic polymer.

3. The transparent sheet according to claim 2, wherein the thermoplastic polymer is a polycarbonate.

4. The transparent sheet according to claim 3, wherein the polycarbonate contains a repeating unit represented by the following formula (B):

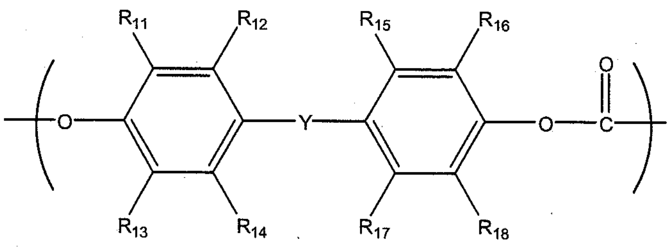

(where $R_{11}$-$R_{18}$ each independently represent hydrogen, a halogen atom or at least one group selected from among C1-22 hydrocarbon groups, and Y represents a group from among the following (Y).

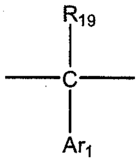 , 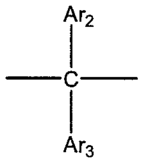 , 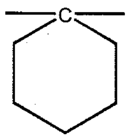 , 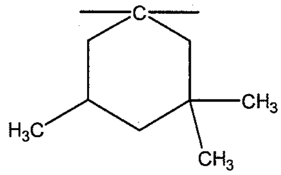 , 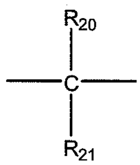 ,

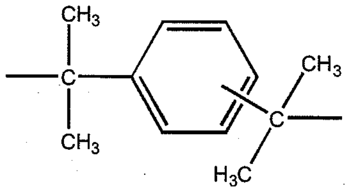 , 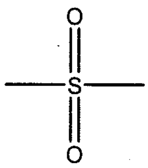 , 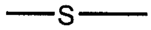 ,

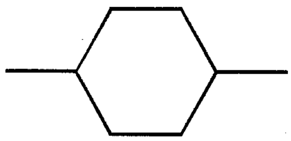 ,

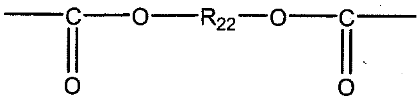 , 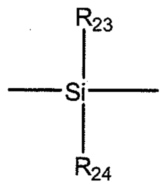 and 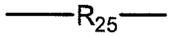 (Y)

where $R_{19}$-$R_{21}$, $R_{23}$ and $R_{24}$ each independently represent hydrogen, a halogen atom or at least one group selected from among C1-22 hydrocarbon groups, $R_{22}$ and $R_{25}$ each independently represent at least one group selected from among C1-20 hydrocarbon groups, and $Ar_1$-$Ar_3$ each independently represent at least one group selected from among C6-10 aryl groups.

**5.** The transparent sheet according to claim 3, wherein the polycarbonate has a fluorene skeleton.

**6.** The transparent sheet according to claim 4, wherein the polycarbonate is a polycarbonate copolymer and/or blend comprising a repeating unit represented by formula (B) above and a repeating unit represented by the following formula (A):

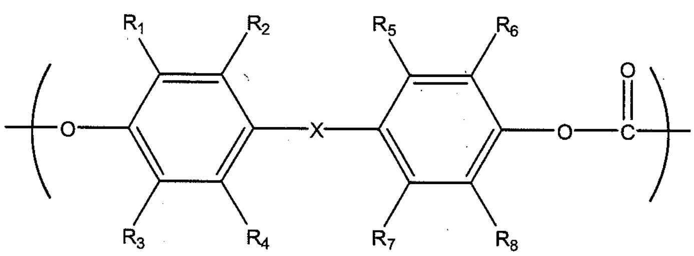

wherein $R_1$-$R_8$ each independently represent hydrogen, a halogen atom or at least one organic group selected from among C1-6 hydrocarbon groups and X is the following group:

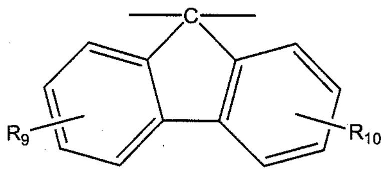

( X )

wherein $R_9$ and $R_{10}$ each independently represent hydrogen, a halogen atom or a C1-3 alkyl group, and the repeating unit represented by formula (A) constitutes 10-90 mol% of the total repeating units composing the polycarbonate.

7. The transparent sheet according to claim 6, wherein the polycarbonate is a polycarbonate copolymer and/or blend comprising a repeating unit represented by the following formula (C.):

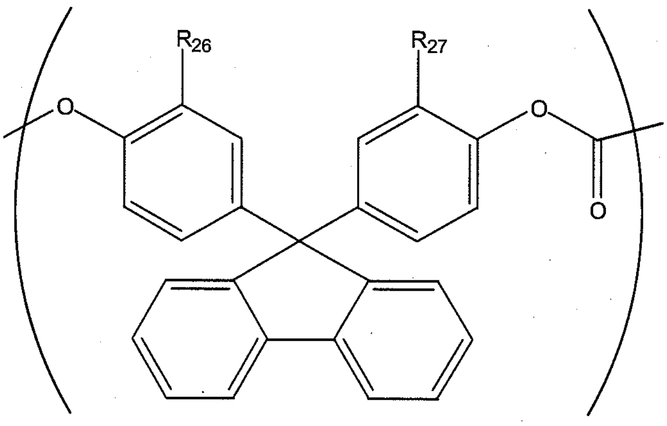

( C )

(wherein $R_{26}$-$R_{27}$ are each independently selected from among hydrogen and methyl), and a repeating unit represented by the following formula (D):

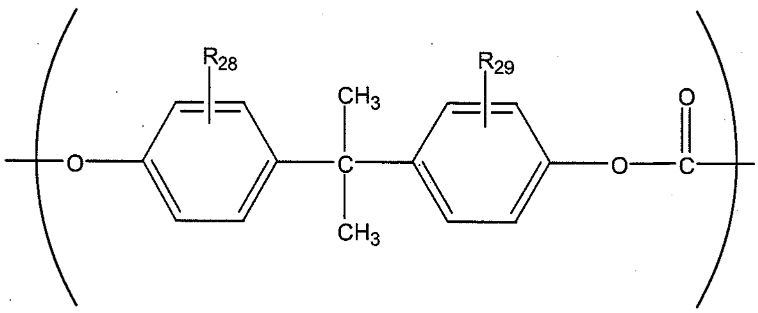

( D )

(wherein $R_{28}$-$R_{29}$ are each independently selected from among hydrogen and methyl), and the contents of the repeating units represented by formulas (C) and (D) above are such that the repeating unit represented by formula (C) constitutes 10-90 mol% and the repeating unit represented by formula (D) constitutes 90-10 mol% of the total.

8. The transparent sheet according to claim 1, wherein the retardation film has a hard coat layer on at least one side thereof.

9. The transparent sheet according to claim 8, wherein the hard coat layer is composed of a crosslinked polymer.

10. The transparent sheet according to claim 9, wherein the crosslinked polymer is an acrylic polymer containing a unit represented by the following formula (1).

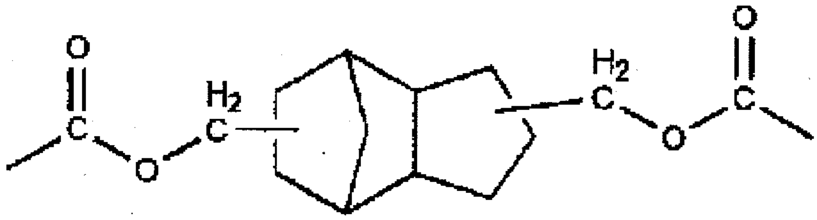

(1)

**11.** The transparent sheet according to claim 1, wherein the retardation film satisfies the following inequality (11):

$$R\ (\lambda 1) < R\ (\lambda 2) \quad (11)$$

wherein R (λ1) and R (λ2) are the in-plane retardation (R) of the retardation film at wavelengths λ1 and λ2 respectively, where the in-plane retardation (R) is represented by the following formula (12):

$$R = (nx-ny) \times d \quad (12)$$

wherein nx and ny are three-dimensional refractive indexes of the retardation film, and specifically the refractive indexes in the x-axis direction which has the maximum refractive index in the plane of the film and in the y-axis direction which is perpendicular to the x-axis in the plane of the film, d represents the thickness (nm) of the retardation film, and λ1 and λ2 are arbitrary wavelengths (nm) that satisfy the following inequality (13).

$$400\ nm < \lambda 1 < \lambda 2 < 700\ nm \quad (13)$$

**12.** The transparent sheet according to claim 1, wherein the retardation film is positioned between two transparent bodies.

**13.** A transparent sheet used for a display device, comprising at least one transparent body and a retardation film, and reflecting display light projected from a display light source to form an image of the display light in the forward field of vision of an observer and render it visible to the observer, the transparent sheet being **characterized in that** the retardation film
is composed of a polycarbonate and has a hard coat layer on at least one side thereof, and
is situated in such a manner that the following inequalities (I) and (II) are satisfied:

$$\frac{0.9\pi}{4} < \cos^{-1}\left( \frac{\cos\left(\sin^{-1}\left(\frac{\sin\theta}{n}\right)\right)\cos\phi}{\sqrt{1-\left(\frac{\sin\theta}{n}\right)^2 \cos^2\phi}} \right) < \frac{1.1\pi}{4} \quad (I)$$

$$0.94\pi < \frac{2\pi}{\lambda} d \left\{ n_x \sqrt{1-\left(\frac{\sin^2\phi}{n_x^2}+\frac{\cos^2\phi}{n_z^2}\right)\sin^2\theta} - n_y \sqrt{1-\left(\frac{\sin^2\phi}{n_z^2}+\frac{\cos^2\phi}{n_y^2}\right)\sin^2\theta} \right\} < 1.06\pi \quad (II)$$

(wherein θ in inequalities (I) and (II) represents the angle formed between the normal to the transparent sheet and the display light, φ represents the angle formed between the projection line of the display light onto the transparent

sheet and the slow axis of the retardation film, n represents the average refractive index of the retardation film, nx, ny and nz are the three-dimensional refractive indexes of the retardation film, namely the refractive indexes in the x-axis direction which has the maximum refractive index in the plane of the retardation film, the y-axis direction which is perpendicular to the x-axis in the plane of the film and the z-axis direction which is normal to the film, d is the thickness (nm) of the retardation film and $\lambda$ is the center wavelength (nm) of the display light source.

**14.** The transparent sheet according to claim 13, wherein the hard coat layer is composed of a crosslinked polymer.

**15.** A display device comprising a transparent sheet according to claim 1 and a display light source, the display device being disposed in such a manner that reflection of display light from the display light source onto the transparent sheet forms an image of the display light in the forward field of vision of the observer and renders it visible to the observer.

Fig. 1

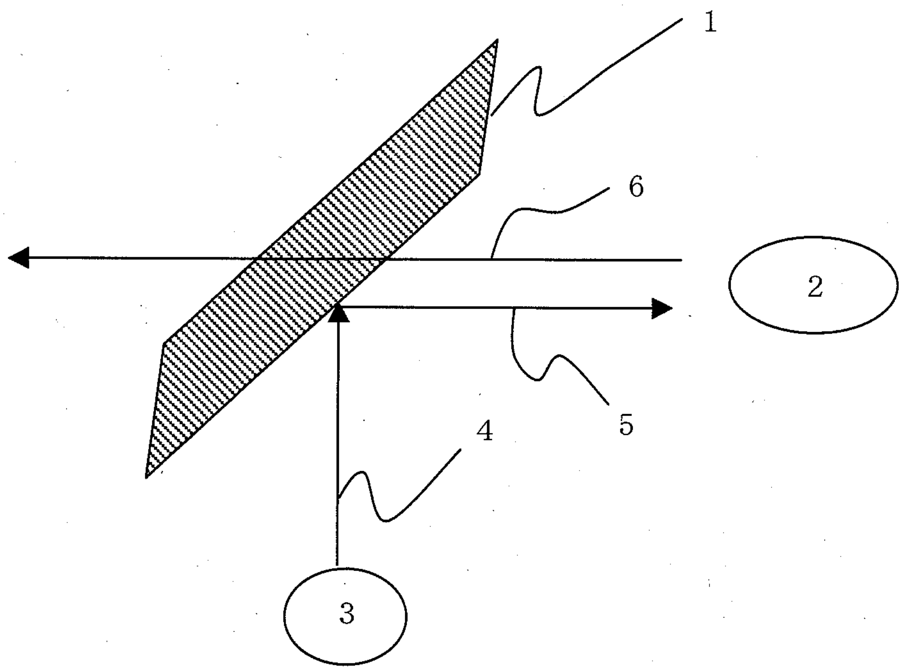

Fig. 2

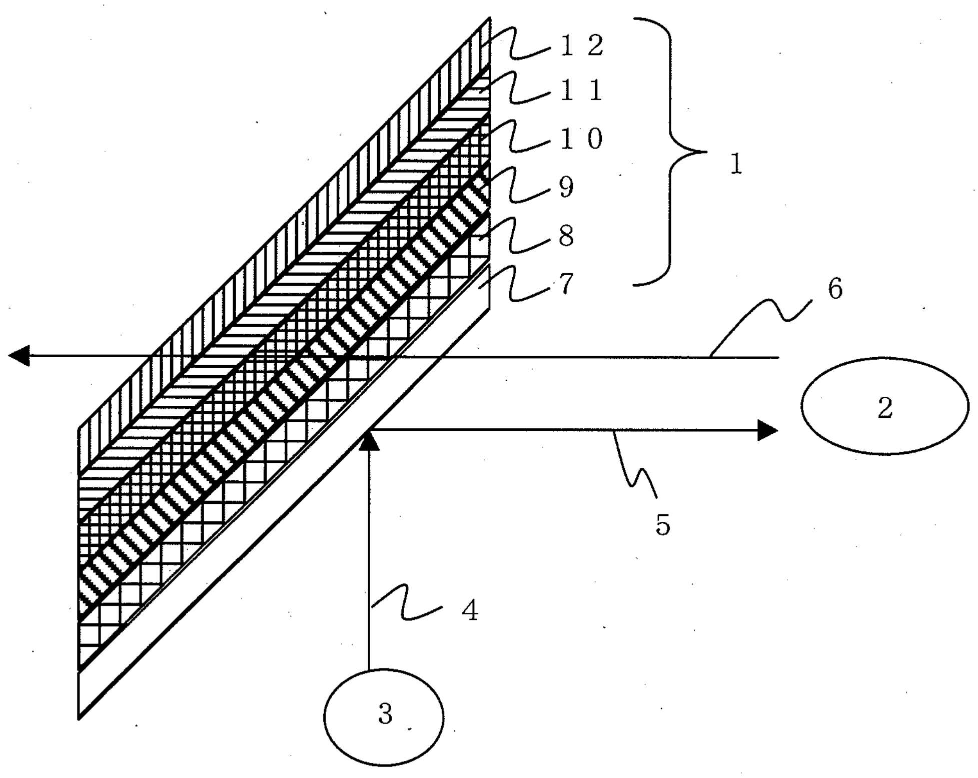

Fig. 3

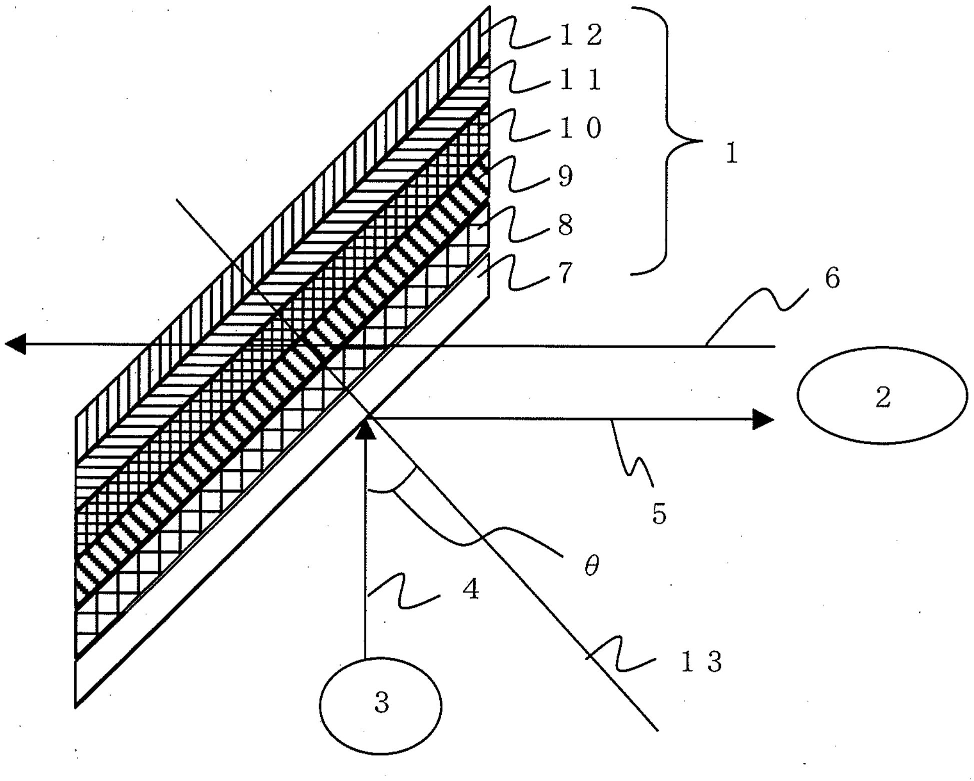

Fig. 4

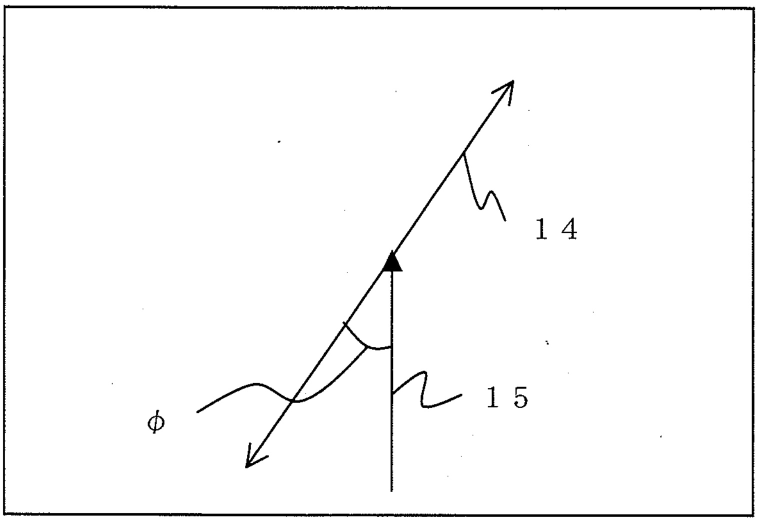

**INTERNATIONAL SEARCH REPORT**

International application No.
PCT/JP2006/307014

A. CLASSIFICATION OF SUBJECT MATTER
*G02B27/01*(2006.01), *G02B5/30*(2006.01)

According to International Patent Classification (IPC) or to both national classification and IPC

B. FIELDS SEARCHED

Minimum documentation searched (classification system followed by classification symbols)
*G02B27/01*(2006.01), *G02B5/30*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 10-96874 A (Asahi Glass Co., Ltd.),<br>14 April, 1998 (14.04.98),<br>Par. Nos. [0014] to [0017]; Fig. 1<br>(Family: none) | 1,12,15<br>2-11,13,14 |
| X<br>Y | JP 2-294615 A (Nissan Motor Co., Ltd.),<br>05 December, 1990 (05.12.90),<br>Page 3, lower left column, line 15 to page 5,<br>lower left column, line 2; Figs. 7, 8<br>(Family: none) | 1,12,15<br>2-7,11 |
| Y | WO 01/081959 A1 (Teijin Ltd.),<br>01 November, 2001 (01.11.01),<br>Full text<br>& JP 2002-14234 A & US 2003-0086027 A1<br>& EP 1197768 A1 & CN 1383495 A<br>& TW 533323 B | 2-7,11-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>14 April, 2006 (14.04.06) | Date of mailing of the international search report<br>25 April, 2006 (25.04.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/307014

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-43225 A (Teijin Ltd.), 13 February, 2003 (13.02.03), Par. Nos. [0051] to [0053] (Family: none) | 8-10,13,14 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2141720 A
- JP 10096874 A